# EUROPEAN PATENT APPLICATION

(11) **EP 4 083 795 A1**
(43) Date of publication of application: **02.11.2022**
(21) Application number: 20913336.2
(22) Date of filing: 21.09.2020
(51) Int. Cl.: G06F 9/455, H04L 12/24

(54) **METHOD FOR DEPLOYING VIRTUAL MACHINE, AND RELATED APPARATUS**

(30) Priority: 19.01.2020 CN 202010060111
(71) Applicant: Huawei Technologies Co., Ltd., Shenzhen, Guangdong 518129 (CN)
(72) Inventor: WU, Zhiling, Shenzhen, Guangdong 518129 (CN)
(74) Representative: Maiwald Patent- und Rechtsanwaltsgesellschaft mbH
(86) International application number: PCT/CN2020/116519
(87) International publication number: WO 2021/143183

(57) **Abstract**

This application relates to the field of network functions virtualization, and discloses a virtual machine deployment method and a related apparatus. According to the method, a network functions virtualization orchestrator NFVO device receives a request for instantiating an NS, where the request for instantiating the NS carries an identifier of the to-be-instantiated NS; the NFVO device obtains a deployment template of the NS NSD based on the identifier of the NS, where the NSD includes description information of a router RD; and the NFVO device requests, based on the description information of the router, a virtualized infrastructure manager VIM to create a router instance. According to this application, this application does not require the NFVO device to separately deploy a router instance before deploying an NS based on an NSD in comparison with conventional technologies. This simplifies the deployment process and improves NS deployment efficiency.

## Description

### VIRTUAL MACHINE DEPLOYMENT METHOD AND RELATED APPARATUS

This application claims priority to Chinese Patent Application No. 202010060111.7, filed with the China National Intellectual Property Administration on January 19, 2020 and entitled "VIRTUAL MACHINE DEPLOYMENT METHOD AND RELATED APPARATUS", which is incorporated herein by reference in its entirety.

### TECHNICAL FIELD

This application relates to the field of network functions virtualization, and in particular, to a virtual machine deployment method and a related apparatus.

### BACKGROUND

The network functions virtualization (network functions virtualization, NFV) technology is a technology that virtualizes functions of dedicated devices in a conventional network into independent applications and flexibly deploys the applications on a unified infrastructure platform built based on standard computing hardware, standard storage hardware, standard network hardware, and other devices. In an NFV system, a network functions virtualization orchestrator (NFV orchestrator, NFVO) device obtains requirements for network deployment according to a network service plan, and applies to a virtualized infrastructure manager (virtualized infrastructure manager, VIM) for resources. The NFVO device requests a virtualized network function manager (virtual network function manager, VNFM) for network element deployment after obtaining the resources allocated by the VIM.

In existing network deployment, the NFVO device first independently deploys a router (router), and then deploys a virtual network function (virtual network function, VNF) based on an network service descriptor NSD, where an IP address of a virtual machine or container of the VNF is dynamically allocated during the VNF deployment. Therefore, an IP address of the VNF is configured on the router after a network service (Network service, NS) is deployed.

Therefore, in the existing network deployment, the NFVO device cannot automatically configure, based on the NSD, a router corresponding to each entity in the NS.

### SUMMARY

This application provides a network deployment method and a related apparatus, to effectively improve a success rate of network deployment.

To achieve the foregoing objective, this application uses the following technical solutions.

According to a first aspect, a virtual machine deployment method is provided, and the method may be applied to a network functions virtualization orchestrator (NFV orchestrator, NFVO) device. In the method, a network functions virtualization orchestrator NFVO device receives a request for instantiating an NS, where the request for instantiating the NS carries an identifier of the to-be-instantiated NS. Then, the NFVO device obtains a deployment template of the NS NSD based on the identifier of the NS, where the NSD includes description information of a router RD. Finally, the NFVO device requests, based on the description information of the router, a virtualized infrastructure manager VIM to create a router instance. According to this application, because the NSD includes the description information of the router, the NFVO device may request, based on the description information of the router, the virtualized infrastructure manager VIM to create the router instance, without a need to separately deploy the router instance before deploying a VNF based on the NSD. This simplifies the deployment process and improves NS deployment efficiency.

In a possible design, the NSD further includes description information of an external virtual link EX VL EX VLD, and the external virtual link is a virtual link between the router instance and a service access point SAP instance of the NS. The NFVO device requests, based on the description information of the EX VL, the VIM to create an external virtual link instance. According to this method, the NFVO device may further request the VIM to create the EX VL instance based on the NSD, so that a virtual machine of the NS can be communicatively connected to an external network via the router.

In a possible design, the NFVO device sends the description information of the external virtual link to the VIM, to request the VIM to create the external virtual link instance based on the description information of the external virtual link.

In a possible design, the description information of the router RD includes an identifier of the EX VLD. The NFVO device requests, based on the identifier of the EX VLD, the VIM to establish a link between the EX VL instance and the router instance, where the request for establishing the link between the EX VL instance and the router instance includes the identifier of the EX VLD and an identifier of the router. The link between the EX VL and the router instance is established, so that the virtual machine of the NS can be communicatively connected to the external network via the router.

In a possible design, the NSD further includes description information of an NS virtual link NS VLD, and the NS VLD is for establishing a virtual link between the router and a VNF instance of the NS. The NFVO device requests, based on the NS VLD, the VIM to create an NS VL instance. According to this method, the NFVO device may further request, based on the NSD, the VIM to create the NS VL instance, so that the VNF of the NS can communicate with another VNF via the router.

In a possible design, the description information of the router RD includes an identifier of the NS VLD. The NFVO device requests, based on the identifier of the NS VLD, the VIM to establish a link between the NS VL instance and the router instance, where the request for establishing the link between the NS VL instance and the router instance includes the identifier of the NS virtual link NS VLD and the identifier of the router. The link between the NS VL instance and the router instance is established, so that the VNF of the NS can communicate with another VNF via the router.

In a possible design, the description information of the router RD includes an IP address of a connection point of a to-be-instantiated VNF. The NFVO device sends a request for instantiating the virtualized network function VNF to a VNFM device, where the request for instantiating the VNF includes the IP address of the connection point of the to-be-instantiated VNF. According to this method, the VNFM may apply to allocate a resource to the VNF based on the IP address in the request for instantiating the VNF

In a possible design, the NFVO device requests to obtain an IP address of a virtual machine or container of the VNF instance from the VNFM device after instantiating the VNF. Based on the IP address of the virtual machine or container, the NFVO device requests the VIM to configure routing information of the virtual machine or container of the VNF instance on the router instance. According to this method, the NFVO device may request the VIM to configure, as the routing information of the virtual machine or container, an IP address that is dynamically allocated to the virtual machine or container of the VNF instance in the VNF instantiation process. In this way, the IP address that is dynamically allocated to the virtual machine or container of the VNF instance may be configured on the router based on the request of the NFVO device, so that the virtual machine or container of the VNF instance can communicate with another entity.

In a possible design, after the VNF instance is scaled up, the NFVO device obtains, from the VNFM device, an IP address of a virtual machine or container newly added to the VNF instance. The NFVO device requests, based on the IP address of the newly added virtual machine or container, the VIM to configure routing information of the newly added virtual machine or container on the router instance. According to this method, the NFVO device may request the VIM to configure, as the routing information of the VNF instance, an IP address that is dynamically allocated to the newly added virtual machine or container of the VNF instance in the VNF instantiation process. In this way, the IP address that is dynamically allocated to the newly added virtual machine or container of the VNF instance may be configured on the router based on the request of the NFVO device, so that the newly added virtual machine or container of the VNF instance can communicate with another entity.

In a possible design, after the VNF instance is scaled down, the NFVO device obtains, from the VNFM device, an IP address of a virtual machine or container deleted from the VNF instance. Then, the NFVO device requests, based on the IP address of the deleted virtual machine or container, the VIM to delete routing information of the deleted virtual machine or container from the router instance. According to this method, the routing information of the virtual machine or container to be deleted from the VNF instance may be deleted from the router instance.

According to a second aspect, a virtual machine deployment method is provided, and the method may be applied to a virtualized infrastructure manager VIM. In the method, the virtualized infrastructure manager VIM receives a request for creating a router instance, where the request for creating the router instance is sent by a network functions virtualization orchestrator NFVO device, and includes description information of a router RD included in a deployment template of an NS NSD. The VIM creates the router instance based on the description information of the router. According to this application, because the NSD includes the description information of the router, the NFVO device may request, based on the description information of the router, the virtualized infrastructure manager VIM to create the router instance, without a need to separately deploy the router instance before deploying a VNF based on the NSD. This simplifies the deployment process and improves NS deployment efficiency.

In a possible design, the VIM receives a request that is for creating an instance for an external virtual link EX VL and sent by the NFVO device, where the external virtual link is a virtual link between the router instance and a service access point SAP instance of the NS, and the request for creating the instance for the external virtual link includes description information of the external virtual link EX VLD. The VIM creates the external virtual link EX VL instance based on the description information of the external virtual link. According to this method, the VIM creates the EX VL instance based on the request of the NFVO device, so that a virtual machine of the NS can be communicatively connected to an external network via the router.

In a possible design, the VIM receives a request for establishing a link between the EX VL instance and the router instance. The request for establishing the link between the EX VL instance and the router instance is sent by the NFVO device, and includes an identifier of the EX VL and an identifier of the router. The VIM establishes the link between the EX VL instance and the router instance based on the request for establishing the link between the EX VL instance and the router instance. The link between the EX VL instance and the router instance is established, so that the virtual machine of the NS can be communicatively connected to the external network via the router.

In a possible design, the VIM receives a request for creating an instance of an NS virtual link NS VL and sent by the NFVO device, where the NS VL is a virtual link between the router instance and a VNF instance of the NS, and the request for creating the instance of the NS virtual link NS VL includes description information of the NS VL NS VLD. The VIM creates instance of the NS virtual link NS VL based on the NS VLD. According to this method, the VIM may further create the NS VL instance based on the request of the NFVO device, so that the VNF of the NS can communicate with another VNF via the router.

In a possible design, the VIM receives a request for establishing a link between the NS VL instance and the router instance, where the request for establishing the link between the NS VL instance and the router instance is sent by the NFVO device, and includes an identifier of the NS virtual link NS VLD and the identifier of the router. The VIM establishes the link between the NS VL instance and the router instance based on the request for establishing the link between the NS VL instance and the router instance. The link between the NS VL instance and the router instance is established, so that the VNF of the NS can communicate with another VNF via the router.

In a possible design, the VIM receives a request that is for configuring routing information of a virtual machine or container of the VNF instance and sent by the NFVO device, where the request for configuring the routing information of the virtual machine of the VNF instance includes the identifier of the router, an IP address of the virtual machine, and an IP address of a connection point of the VNF instance; or the request for configuring the routing information of the container of the VNF instance includes the identifier of the router, an IP address of the container, and an IP address of a connection point of the VNF instance. The VIM configures the routing information of the virtual machine or container of the VNF instance on the router instance based on the request for configuring the routing information of the virtual machine or container of the VNF instance. According to this method, the VIM may configure, on the router based on the request of the NFVO device, the IP address that is dynamically allocated to the virtual machine or container of the VNF instance, so that the virtual machine or container of the VNF instance can communicate with another entity.

In a possible design, the VIM receives a request for deleting routing information of a virtual machine or container of the VNF instance, where the request for deleting the routing information of the virtual machine or container of the VNF instance is sent by the NFVO device, and includes the identifier of the router, an IP address of the virtual machine or container, and an IP address of a connection point of the VNF instance. The VIM deletes the routing information of the virtual machine or container of the VNF instance from the router instance based on the request for deleting the routing information of the virtual machine or container of the VNF instance. According to this method, the routing information of the virtual machine or container to be deleted from the VNF instance may be deleted from the router instance.

According to a third aspect, a communication apparatus is provided, configured to implement the method according to the first aspect. The communication apparatus may be a network functions virtualization orchestrator NFVO device. For example, the apparatus includes a receiving unit, a processing unit, and a sending unit.

For a specific implementation of a method performed by the network functions virtualization orchestrator NFVO device, refer to the description in the first aspect. Details are not described again.

According to a fourth aspect, a communication apparatus is provided, configured to implement the method according to the second aspect. The communication apparatus is a virtualized infrastructure manager VIM. For example, the communication apparatus includes a receiving unit and a processing unit.

For a specific implementation of a virtual machine deployment method, refer to the description in the second aspect. Details are not described again.

It should be noted that the functional modules in the fourth aspect and the third aspect may be implemented by hardware, or may be implemented by hardware by executing corresponding software. The hardware or software includes one or more modules corresponding to the function. For example, a transceiver is configured to implement functions of the receiving unit and the sending unit, a processor is configured to implement functions of the processing unit, and a memory is configured to store program instructions used by the processor to perform the methods in this application. The processor, the transceiver, and the memory are connected through a bus to implement mutual communication. For details, refer to functions of behavior of the application deployment server or the NFVO device in the method according to the first aspect to the method according to the fourth aspect.

According to a fifth aspect, this application further provides a communication apparatus, configured to implement the method according to the first aspect. The communication apparatus includes a chip system. For example, the communication apparatus includes a processor, configured to implement the functions in the method according to the first aspect or the third aspect. The communication apparatus may further include a memory, configured to store program instructions and data. The memory is coupled to the processor, and the processor may invoke and execute the program instructions stored in the memory, to implement the functions in the method according to the first aspect or the third aspect. The communication apparatus may further include a communication interface, and the communication interface is used by the communication apparatus to communicate with another device. For example, the communication apparatus is an NFVO device.

In a possible device, the communication interface may be a transceiver. For details, refer to the descriptions in the foregoing aspects. Details are not described again.

According to a sixth aspect, this application further provides a communication apparatus, configured to implement the method according to the second aspect. The communication apparatus is a virtualized infrastructure manager VIM. For example, the communication apparatus includes a processor, configured to implement the functions in the method according to the second aspect. The communication apparatus may further include a memory, configured to store program instructions and data. The memory is coupled to the processor, and the processor may invoke and execute the program instructions stored in the memory, to implement the functions in the method according to the second aspect. The communication apparatus may further include a communication interface, and the communication interface is used by the communication apparatus to communicate with another device.

In a possible device, the communication interface may be a transceiver. The processor is configured to deploy a first virtual machine on a first server according to a first virtual resource template indicated by an identifier of the first virtual resource template, or deploy a second virtual machine on a second server according to a second virtual resource template indicated by an identifier of the second virtual resource template.

According to a seventh aspect, this application further provides a computer-readable storage medium, including computer software instructions. When the computer software instructions are run in a communication apparatus, the communication apparatus is enabled to perform the method according to the first aspect or the second aspect.

According to an eighth aspect, this application further provides a computer program product including instructions. When the computer program product runs in a communication apparatus, the communication apparatus is enabled to perform the method according to the first aspect or the second aspect.

According to an eleventh aspect, this application provides a chip system. The chip system includes a processor, and may further include a memory, configured to implement functions of the NVFO device or the virtualized infrastructure manager VIM in the foregoing method. The chip system may include a chip, or may include a chip and another discrete device.

According to a twelfth aspect, this application further provides a communication system. The communication system includes the NFVO device in the third aspect and the virtualized infrastructure manager VIM in the fourth aspect.

In addition, for technical effects brought by a design manner of any one of the foregoing aspects, refer to technical effects brought by different design manners of the first aspect and the second aspect. Details are not described herein again.

### BRIEF DESCRIPTION OF DRAWINGS

FIG. 1 is an example diagram of an NFV system architecture according to an embodiment of this application;
FIG. 2A is a schematic diagram depicting a structure of an NSD according to an embodiment of this application;
FIG. 2B is a schematic diagram depicting a structure of an NS deployed based on the foregoing NSD according to an embodiment of this application;
FIG. 3 is a flowchart of instantiating an NS and instantiating a VNF method according to an embodiment of this application;
FIG. 4 is a schematic diagram depicting a structure of an NS deployed based on FIG. 3 according to an embodiment of this application;
FIG. 5 is a flowchart of a method for adding routing information of a virtual machine after a VNF instance is scaled up according to an embodiment of this application;
FIG. 6 is a flowchart of a method for deleting routing information of a virtual machine after a VNF instance is scaled down according to an embodiment of this application;
FIG. 7 is a schematic composition diagram of a communication apparatus according to this application;
FIG. 8 is a schematic composition diagram of another communication apparatus according to this application; and
FIG. 9 is a schematic composition diagram of another communication apparatus according to this application.

### DESCRIPTION OF EMBODIMENTS

In the specification, claims, and accompanying drawings of this application, the terms "first", "second", "third" and the like are intended to distinguish between different objects but do not limit a particular order.

In embodiments of this application, the expression "example" or "for example" is used to represent giving an example, an illustration, or a description. Any embodiment or design solution described as the expression "example" or "for example" in embodiments of this application should not be explained as being more preferred or having more advantages than another embodiment or design solution. Specifically, use of the expression "example" or "for example" is intended to present a relative concept in a specific manner.

For ease of concise description of the following embodiments, brief descriptions of related technologies are first provided.

A conventional telecommunication system includes various dedicated hardware devices, and different hardware devices are used to implement different functions. With the growth of a network scale, the telecommunication system becomes more complex, which brings many challenges in various aspects such as development and rollout of new services, system O&M, and resource utilization. To cope with these challenges, by using virtualization and cloud computing technologies in the Internet technology (internet technology, IT) industry, 13 major telecom operators around the world jointly released a network functions virtualization (network function virtualization, NFV) white paper, and announced the establishment of the NFV industry specification group (industry specification group, ISG) in European Telecommunications Standards Institute (european telecommunications standards institute, ETSI), to formulate NFV requirements and technical frameworks and promote NFV development.

Based on the virtualization technologies, the NFV technology is used to perform resource pooling and virtualization on infrastructure hardware devices (such as computing devices, storage devices, and network devices), provide virtual resources for upper-layer applications, and decouple software from hardware. When new services are developed, the services only need to be virtualized into independent applications (for example, VNFs) by using the virtualization technologies, and no hardware devices need to be separately deployed. This greatly shortens rollout time of the new services and greatly accelerates the provisioning of virtual resources.

Based on the cloud computing technology, the NFV technology may be used to implement auto-scaling of applications to implement tradeoff between virtual resources and service load. This improves utilization efficiency of the virtual resources and improves a response rate of an NFV system.

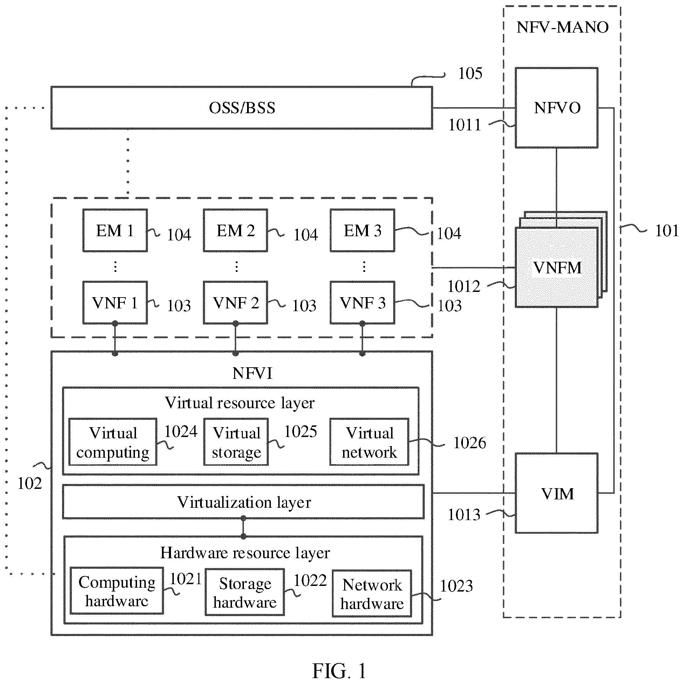

FIG. 1 is an example diagram of an NFV system architecture according to an embodiment of this application. The NFV system can be used in various networks such as a data center network, a telecom operator network, and a local area network. The NFV system includes an NFV management and orchestration (NFV management and orchestration, NFV MANO) system 101, an NFV infrastructure (NFV infrastructure, NFVI) layer 102, a plurality of virtualized network functions (Virtual Network Function, VNF) 103, a plurality of element management (element management, EM) systems 104, and an operations support system/business support system (operations support system/business support system, OSS/BSS) 105.

The NFV MANO system 101 is configured to monitor and manage the NFVI 102 and the VNFs 103. The NFV management and orchestration system 101 includes an NFV orchestrator (NFV orchestrator, NFVO) 1011, one or more VNF managers (VNF manager, VNFM) (which may also be referred to as NFVO devices) 1012, and a virtualized infrastructure manager (virtualized infrastructure manager, VIM) 1013.

The NFVO 1011 (which may also be referred to as an NFVO device) is mainly responsible for managing lifecycles of virtualization services, allocating and scheduling virtual resources in the virtual infrastructure manager and the NFVI. The NFVO 1011 may also execute one or more resource-related requests (for example, one or more requests for obtaining VNFDs) from one or more VNFMs 1012, send configuration information (for example, VNFDs, a request for modifying VNF information, and a request for instantiating a VNF) to the VNFM 1012, and collect status information of the VNFs 103. The VNFD may be stored in the NFVO or in a database managed by the NFVO, so that the NFVO can obtain the VNFD and feed back the VNFD to the VNFM, and the VNFM deploys a VNF based on the VNFD. The NFVO may store VNFDs corresponding to VNFs having a plurality of functions. In addition, the NFVO 1011 may communicate with the VIM 1013, to allocate and/or reserve resources, and exchange configuration and status information of virtualized hardware resources. For example, the NFVO 1011 may request the VIM 1013 to create a router instance, establish an external virtual link EX VL from a router to a service access point SAP, establish a network service virtual link NS VL from each VNF to the router, and configure routing information of each virtual machine on the router.

The VNFM 1012 is mainly responsible for managing lifecycles of one or more VNFs 103, for example, instantiating (instantiating), updating (updating), querying, auto-scaling (scaling), and terminating (terminating) the VNFs 103. The VNFM 1012 may communicate with the VNFs 103, to manage the lifecycles of the VNFs 103 and exchange configuration and status information. There may be a plurality of VNFMs 1012 in the NFV system, which are responsible for managing lifecycles of different types of VNFs. In addition, the VNFM 1012 may further send an IP address of a virtual machine or container of a VNF instance to the NFVO 1011 after completing VNF instantiation.

The VIM 1013 may perform resource management functions, such as allocating infrastructure resources (for example, adding resources to virtual containers) and performing operation functions (for example, collecting fault information of the NFVI). The VNFM 1012 and the VIM 1013 may communicate with each other to allocate resources and exchange configuration and status information of virtualized hardware resources, for example, control and manage the VNFs 103 to interact with computing hardware 1021, storage hardware 1022, network hardware 1023, virtual computing (virtual computing) 1024, virtual storage 1025, and a virtual network 1026. The VIM 1013 may further create a router instance based on a request of the NFVO 1011, establish the external virtual link EX VL from the router to the service access point SAP and the network service virtual link NS VL from each VNF to the router, and configure the routing information of each virtual machine on the router.

The NFVI 102 includes a hardware resource layer, a virtualization layer (virtualization layer), and a virtual resource layer. Hardware resources, software resources, or a combination of the hardware resources and the software resources included in the NFVI 102 are used for deployment of a virtualized environment. In other words, the hardware resources and the virtualization layer are used to provide the VNF 103 with virtual resources in a form of virtual machine or another form of virtual container. The hardware resource layer includes the computing hardware 1021, the storage hardware 1022, and the network hardware 1023. The computing hardware 1021 may be existing hardware in the market and/or user-customized hardware, and is configured to provide processing and computing resources. The storage hardware 1022 may be a storage capacity provided by a network or a storage capacity of a component in the storage hardware 1022 (a local memory in a server). In an implementation solution, resources of the computing hardware 1021 and the storage hardware 1022 may be aggregated. The network hardware 1023 may be a switch, a router, and/or any other network device configured with a switching function. The network hardware 1023 may cross a plurality of domains, and may include a network constituted by one or more interconnected transport networks. The virtualization layer in the NFVI 102 may abstract hardware resources from a physical layer and decouple the VNFs 103, to provide the VNFs 103 with virtualized resources. The virtual resource layer includes the virtual computing 1024, the virtual storage 1025, and the virtual network 1026. The virtual computing 1024 and the virtual storage 1025 may be provided to the VNFs 103 in a form of virtual machine and/or another form of virtual container. For example, one or more VNFs 103 may be deployed on one virtual machine (virtual machine, VM). The virtualization layer abstracts the network hardware 1023 to form the virtual network 1026. The virtual network 1026 may include a virtual switch (virtual switch), and the virtual switch is configured to provide a link between a virtual machine and another virtual machine. In addition, the transport network in the network hardware 1023 may be virtualized using a centralized control plane and an independent forwarding plane (for example, software-defined networking).

In terms of hardware, the computing hardware 1021, the storage hardware 1022, and the network hardware 1023 may include a plurality of chassis, a plurality of racks, and even a plurality of equipment rooms. In terms of software, there may be one VIM 1013 or a plurality of VIMs for managing different hardware resources.

The VNF 103 is a virtualized network function instance.

The device management (EM) system 104 is a system for configuring and managing devices in a conventional network. In the NFV system, the EM 104 may also configure and manage the VNFs 103, and initiate a lifecycle management operation such as instantiating a new VNF 103 to the VNFM 1012.

The operations support system and business support system (Operations Support System and Business Support System, OSS/BSS) 105 support various end-to-end telecom services. The OSS supports management functions including network configuration, service provision, and fault management. The BSS supports functions including ordering, payment, and income processing, product management, order management, revenue management, and customer management.

In the NFV system, a virtualized network service (Network Service, NS) may be an IP multimedia subsystem (IP multimedia subsystem, IMS) network service, a next-generation mobile evolved packet core (Evolved Packet Core, EPC) network service, or the like. One NS may include several VNFs. During NS virtualization deployment, a provider of a virtualization service needs to obtain, from a requester of the virtualization service, description information of the service, namely, a network service template (Network Service descriptor, NSD). The NSD mainly describes topology structure information of the service and description information of each included VNF (VNFD). In the topology structure information, a virtual link template (virtual link descriptor, VLD) may be used to describe a link between VNFs. The requester of the virtualization service may be the NFVO or a sender (sender), where the sender may be specifically the OSS/BSS.

According to the system shown in FIG. 1, the NFVO device requests, based on description information of a router, the virtualized infrastructure manager VIM to create a router instance. According to this application, because the NSD includes the description information of the router, the NFVO device may request, based on the description information of the router, the virtualized infrastructure manager VIM to create the router instance, without a need to separately deploy the router instance before deploying a VNF based on the NSD. This simplifies the deployment process and improves NS deployment efficiency. In addition, the NFVO device may further request the VIM to configure routing information of a virtual machine on the router instance, so that the virtual machine can communicate with the outside.

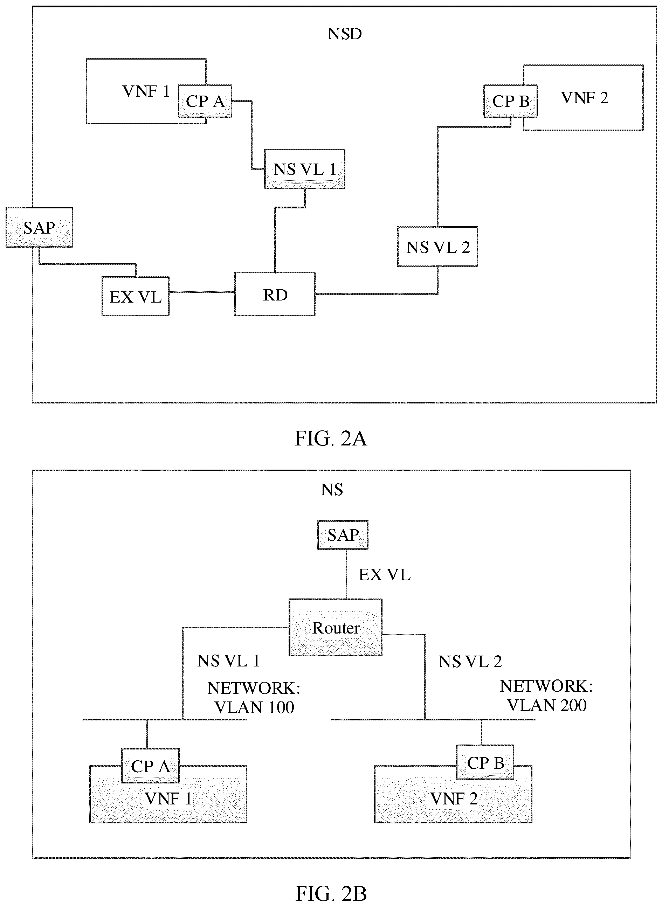

FIG. 2A is a schematic diagram depicting a structure of an NSD according to this application. As shown in FIG. 2A, the NSD includes information about a VNF 1 (for example, an identifier of a VNFD of the VNF 1); information about a VNF 2 (for example, an identifier of a VNFD of the VNF 2); description information of a router (router descriptor); NS virtual links (virtual link, NS VL) between various VNFs and the router, for example, an NS VL 1 between a connection point CP A of the VNF 1 and the router and an NS VL 2 between a connection point CP B of the VNF 2; and description information of a service access point (descriptor of a service access point, SAPD) of the network service. The NSD further includes information such as a external virtual link (external virtual link, EX VL) between the router and a service access point (service access point, SAP).

A CP is a connection point for communication between a VNF and another VNF or an external network. Information about the CP may be, for example, information about a virtual network adapter, and may be represented using an IP address or a MAC address. The information about the CP may be obtained from the NSD, for example, from a Deployment Flavour DF of a corresponding VNF in the NSD.

When one VNF includes a plurality of virtual machines (virtual machine, VM) or containers, the plurality of virtual machines or containers communicate with the outside via an address of one CP. When the plurality of virtual machines or containers of the one VNF communicate with the outside via the address of the one CP, the communication address of the CP may be referred to as a loopback (loopback) IP address or a virtual IP (virtual IP) address. The loopback IP address is an IP address of a VNF in a scenario in which a plurality of virtual machines of the VNF share load with each other. The virtual IP address is an IP address of a VNF in a scenario in which a plurality of virtual machines of the VNF work in an active/standby mode. The NS VL is a virtual link connected to a VNF in an NS. Description information of an NS VL NS VLD describes the NS VL. The NS VLD includes a link type, a bandwidth, and network information of the NS VL. The description information (VLD) of the NS VL includes a segmentation identifier (segmentation id) of a network to which the NS VL belongs. The segmentation identifier of the network may indicate a network segment to which the VNF connected to the NS VL belongs, for example, a VLAN 100. The NS VLD may further include an IP address allocation pool (ip_allocation_pools) of virtual machines or containers included in the VNF connected to the NS VL, for example, 100.100.100, which indicates that an IP address of a virtual machine or container included in the VNF may be an IP address, for example, 100.100.100.

The description information of a router (router descriptor, RD) in the NSD is used to describe a connection relationship between the NS VL and the router (which may be a virtual router) and between an EX VL and the router, for example, description information of a link between a port of the router and a VL.

In this application, the description information of the router RD included in the NSD includes one or more entries in Table 1 or Table 1.

**Table 1**

| Attribute | Content | Description |
|---|---|---|
| rdId | Identifier | Indicates an identifier of the description information of the router. |
| name | Character string | Indicates a name of the description information of the router. |
| **virtualLinkDescId** | Identifier | Is a unique identifier of a VLD connected to a VNF |
| **ExternalVirtualLinkDescId** | Identifier | Is a unique identifier of a VLD connected to a SAP. |
| distributed | Boolean value | Indicates whether to set up a distributed router. |
| **routeConfig** | Route configuration data | Is used to configure routing information of the router. |
| routeExtraParameters | Any content | Is used to set up and configure extra parameters of the router. |

Table 1 indicates that the NS VLD and the EX VLD are represented using different fields. Optionally, the NS VLD and the EX VLD may be represented using a same field, as shown in Table 2.

**Table 2**

| Attribute | Content | Description |
|---|---|---|
| rdId | Identifier | Indicates an identifier of the description information of the router. |
| name | Character string | Indicates a name of the description information of the router. |
| **virtualLinkDescId** | Identifier | Is a unique identifier of a VLD connected to a VNF or a unique identifier of a VLD connected to a SAP. |
| distributed | Boolean value | Indicates whether to set up a distributed router. |
| **routeConfig** | Route configuration data | Is used to configure routing information of the router. |
| routeExtraParameters | Any content | Is used to set up and configure extra parameters of the router. |

For description information of the NS VL 1 and the NS VL 2, refer to Table 3. One or more entries in Table 3 may be included.

**Table 3**

| Attribute | Content | Description |
|---|---|---|
| virtualLinkDescId | Identifier | Indicates an identifier of the description information of the NS VL. |
| connectivityType | Connectivity type | Indicates a connectivity type of the NS VL. |
| virtualLinkDf | VirtualLinkDf | Indicates a deployment flavor (deployment flavour) of the NS VL, including ip_allocation_pools and segmentation_id. |
| loopbackIP | Character string | Is loopback IP information, where virtual machines for load sharing connected to the same NS VL share the loopback IP address. |
| virtualIP | Character string | Is a virtual IP address, where virtual machines connecting to |
| | | the same NS VL that work in an active/standby mode share the virtual IP address. |

As shown in FIG. 2B, the VNFM device deploys the NS based on the foregoing NSD, and the deployed NS includes a virtualized network function (virtualized network function) instance 1, a VNF instance 2, a CP A instance, a CP B instance, an NS VL 1 instance, an NS VL 2 instance, a router instance, a SAP instance, and an EX VL instance. The NFVO device may determine, based on information in segmentation_id in virtualLinkDf, a subnet to which a VNF connected to an NS VL belongs. For example, the NFVO device determines, based on segmentation_id of the NS VL 1, that the VNF 1 belongs to a subnet (a virtual local area network) 100; and determines, based on segmentation_id of the NS VL 2, that the VNF 2 belongs to a subnet (a virtual local area network) 200. For ease of description, a VNF instance is briefly referred to as a VNF, a router instance is briefly referred to as a router, an NS VL instance is briefly referred to as an NS VL, and an EX VL instance is briefly referred to as an EX VL.

In this application, a topology and orchestration specification for cloud applications (Topology and Orchestration Specification for Cloud Applications, TOSCA) may be used to describe the NSD. The TOSCA is a description specification developed by the Advancing Open Standards for the Information Society (Advancing Open Standards for the Information Society, OASIS).

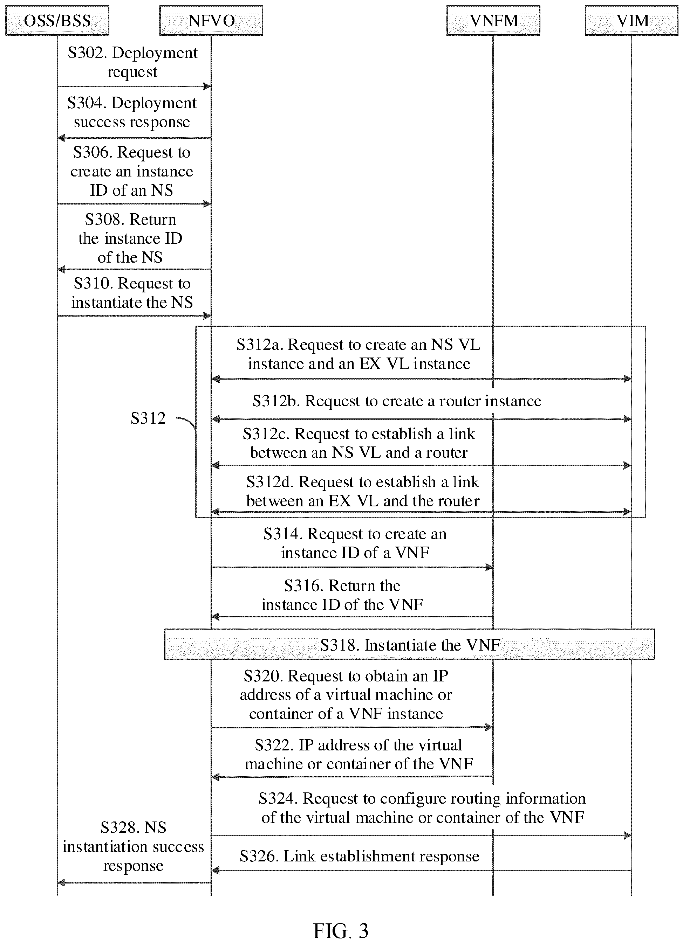

FIG. 3 is a flowchart of instantiating an NS and instantiating a VNF according to an embodiment of this application. As shown in FIG. 3, the method may include the following steps.

S302. An OSS/BSS sends a request for deploying an NS to an NFVO device.

The request for deploying the NS may include information (for example, an NSD ID) about a deployment template (NSD) of the to-be-deployed NS or an NSD of the to-be-deployed NS, where the NSD includes an identifier (Identifier, ID) of the NSD. The request for deploying the NS may be an "NSD on-boarding" request defined in the ETSI standard.

S304. After receiving the request for deploying the NS, the NFVO device obtains the NSD based on the request for deploying the NS, and returns a deployment success response to the OSS/BSS.

For example, the NFVO device may obtain the NSD based on the NSD ID included in the request for deploying the NS. The NFVO device may obtain the NSD included in the deployment request; or obtain, based on the NSD ID in the deployment request, the NSD pre-stored in the NFVO device.

S306. After receiving the deployment success response, the OSS/BSS initiates, to the NFVO device, a request for creating an ID of an NS instance.

The request for creating the ID of the NS instance includes the NSD ID stored in step S304.

S308. The NFVO device creates the ID of the NS instance, and sends the created ID of the NS instance to the OSS/BSS.

S310. The OSS/BSS initiates, to the NFVO device, a request for instantiating the NS, where the request for instantiating the NS carries the ID of the NS instance.

S312. After receiving the request for instantiating the NS, the NFVO device instantiates the NS based on the ID of the NS instance, and the NFVO device performs the following steps in the NS instantiation process.

S312a. The NFVO device requests, based on description information of an NS VL and description information of an EX VL included in the NSD, a VIM to create the NS VL and the EX VL.

For description information of an NS VL 1 and description information of an NS VL 2, refer to Table 2. FIG. 2B is used as an example. The NS VL 1 is a VL in a virtual local area network (virtual LAN) 100, and the NS VL 2 is a VL in a VLAN 200. The description information in the NSD further includes information about connection points CP A and CP B of a VNF that are respectively connected to the NS VL 1 and the NS VL 2. The CP A and the CP B may be loopbackIP or virtualIP in Table 2, and information about ip_allocation_pools of a virtual machine or container included in the VNF connected to the NS VL. ip_allocation_pools indicates that an IP address of the virtual machine or container may be one of ip_allocation_pools.

S312b. The NFVO device sends, to the VIM based on an RD included in the NSD, description information of a router (router descriptor) included in the NSD, to request the VIM to set up the router.

The NFVO device may send, by invoking an interface of the VIM, the request for setting up the router to the VIM, to request the VIM to set up the router. For the description information of the router included in the request for setting up the router, refer to Table 1 or Table 2. In the example of the OpenStack standard, the NFVO device sends a POST/v2.0/routers message and a PUT/v2.0/routers/{router_id}/add_extraroutes message to the VIM by invoking POST/v2.0/routers and PUT /v2.0/routers/{router_id}/add_extraroutes of the VIM.

The POST/v2.0/routers message carries router.name/distributed, that is, an identifier of the router and/or information indicating whether to set up a distributed router. For a value of router.name/distributed, refer to the name and/or the information indicating whether to set up a distributed router (name/distributed) in the RD in the NSD. The PUT/v2.0/routers/ message carries Routes.destination/nexthop, that is, a destination address and/or a next-hop address of the router. For a value of Routes.destination/nexthop, refer to the route configuration data (routeConfig) in the RD in the NSD. The route configuration data in the RD includes default routing information of the router, and the default routing information includes the destination address and/or the next-hop address.

Optionally, the NFVO device may send related information of the RD in the NSD to the VIM via the request for setting up the router, to request the VIM to set up the router. The NFVO device may further send the related information of the RD in the NSD to the VIM via one message, and the message includes content carried in the PUT/v2.0/routers/ message and the POST/v2.0/routers message.

S312c-d. The NFVO device sends, to the VIM based on an identifier of the NS VLD and an identifier of the EX VLD that are included in the RD, a request for establishing a link between the router and a virtual link VL, where the VL may be an NS VL and/or an EX VL, and the request for establishing the link between the router and the virtual link VL carries description information of the NS VL and/or EX VL, and/or a subnet ID (subnet identifier) determined based on the description information of the NS VL and/or EX VL.

Refer to the OpenStack standard. The request for establishing the link between the router and the virtual link VL may be a PUT/v2.0/routers/{router_id}/add_router_interfacemessage, where router_id is rdID in Table 1. The subnet ID of the NS VL is determined by the NFVO device based on subnet information in the description information of the NS VL. The subnet ID of the EX VL is determined by the NFVO device based on subnet information in the description information of the EX VL.

It should be noted that step 312 may further include another process of instantiating the NS, in addition to step 312a to step 312d. This is not limited or described in detail in this embodiment of this application. Further, step 312a to step 312d may be considered as four independent steps. The NFVO device may alternatively send, to the VIM via one message, related information about instantiating the NS, to request the VIM to establish the NS VL, EX VL, the router, the link between the router and the NS VL, and the link between the router and the EX VL.

In step 312, after receiving the information sent by the NFVO device, the VIM performs operations requested by the NFVO device, for example, establishing the NS VL, establishing the EX VL, creating the router, establishing the link between the NS VL and the router, and establishing the link between the EX VL and the router. For a specific method for performing the foregoing operations performed after the VIM receives the request sent by the NFVO device, refer to the conventional technologies. Details are not described herein in this embodiment of this application.

S314. The NFVO device sends, to a VNFM device, a request for creating an instance ID of the VNF

The request that is for creating the instance ID of the VNF and sent by the NFVO device to the VNFM device may carry a VNFM ID of the to-be-instantiated VNF

S316. The VNFM device allocates the VNF instance ID to the VNF instance, and returns the VNF instance ID to the NFVO device.

S318. After receiving the VNF instance ID, the NFVO device initiates, to the VNFM device, a process of instantiating the VNF, where the process of instantiating the VNF by the VNFM device includes: The VNFM device applies to the VIM for establishing a network of the VNF, and the VIM establishes the network in the VNF

For the process of instantiating the VNF in this embodiment of this application, refer to the conventional technologies. Details are not described herein in this embodiment of this application.

In an optional manner, when the NFVO device initiates, to the VNFM device, the process of instantiating the VNF, the NFVO device sends an IP address of a connection point of the to-be-instantiated VNF (for example, an IP address of a CP A, and an IP address of a CP B, that is, a virtual IP address or a loopback IP address of the VNF) to the VNFM device. Therefore, the VNFM device obtains the IP address of the connection point of the VNF from the request that is for instantiating the VNF and sent by the NFVO device, without a need to obtain the IP address of the connection point of the VNF from the VNFD.

S320. The NFVO device requests to obtain an IP address of a virtual machine or container of the VNF instance from the VNFM device after instantiating the VNF, where the IP address of the virtual machine (or the IP address of the container) of the instantiated VNF is allocated by the VIM to the instantiated VFN in the process of instantiating the VFN, and the instantiated VNF may also be referred to as a VNF instance. The VIM allocates the IP address to the virtual machine of the VNF instance based on an IP address allocation pool ip_allocation_pools carried in a VL connected to the VNF. For example, if ip_allocation_pools in the VLD of the NS VL 1 is 100.100.100, the IP address allocated to the virtual machine based on the IP address allocation pool may be one or more IP addresses of 100.100.100.1, and 100.100.100.2 to 100.100.100.255. If ip_allocation_pools in the VLD of the NS VL 2 is 100.101.101, the IP address allocated to the virtual machine based on the IP address allocation pool may be one or more IP addresses of 100.101.101.1, and 100.101.101.2 to 100.101.101.255.

The NFVO device may query detailed information of the VNF instance to obtain the IP address of the virtual machine allocated to the VNF in the process of instantiating the VNF. For example, the NFVO device may obtain, via a GET message, the IP address of the virtual machine allocated to the VNF instance, where the GET message carries the VNF instance ID.

There may be one or more IP addresses of one or more virtual machines in the VNF instance, which is/are used by the one or more virtual machines in the VNF instance to communicate with a virtual machine in another VNF instance through the NS VL connected to the VNF instance, or communicate with an external network of the NS. A plurality of IP addresses of virtual machines allocated by the VIM to the VNF instance may be used as communication addresses of the plurality of virtual machines in the VNF instance. The plurality of virtual machines in the VNF instance may be virtual machines sharing load with each other, or may be virtual machines working in an active/standby mode that implement a same function.

S322. The NFVO device receives the IP address that is of the virtual machine or container of the VNF instance and sent by the VNFM device.

S324. The NFVO device requests, based on the address of the connection point of the VNF and the IP address allocated to the virtual machine or container of the VNF instance corresponding to the VNF, the VIM to configure routing information of the virtual machine or container of the VNF instance on the router instance, where the routing information of the virtual machine or container includes the address of the connection point of the VNF and the IP address of the virtual machine or container.

For example, in the OpenStack standard, the NFVO device requests, by sending a request (for example, the PUT/v2.0/routers/ message) for configuring a route of the virtual machine of the VNF instance, the VIM to configure, on the router instance, the route for accessing the virtual machine of the VNF instance. The request for configuring the route of the virtual machine of the VNF instance may include an identifier of a router, a destination address of the to-be-added router for routing, and a next-hop address of the VNF instance. The destination IP address for routing may be the loopback IP address or the virtual IP address of the VNF. The next-hop address is one or more IP addresses of one or more virtual machines allocated by the VIM to the VNF instance.

S326. The VIM configures, based on the identifier of the router, the destination address of the to-be-added router for routing, and the next-hop address of the VNF instance that are included in the request for establishing a link between the IP address of the virtual machine or container of the VNF instance and the router, a routing table on the router indicated by the identifier of the router, where the request is sent by the NFVO device, and the routing table includes the destination address for routing and the one or more IP addresses of the one or more virtual machines; and the VIM sends a link establishment response to the NFVO device.

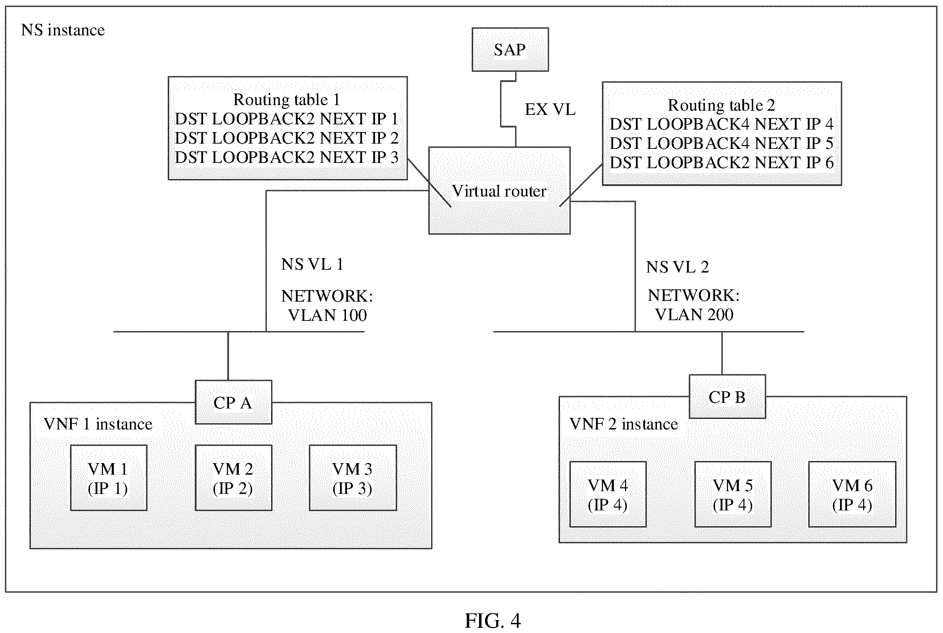

For the routing table that includes the destination address for routing and the one or more IP addresses of the one or more virtual machines or containers and that is configured by the VIM on the router, refer to a routing table 1 or a routing table 2 in FIG. 4. The destination address is loopback2 or loopback4, and next-hop addresses are: an IP 1, an IP 2, an IP 3, an IP 4, an IP 5, and an IP 6. Refer to the description of S320. The IP 1 to the IP 3 may be 100.100.100.1, 100.100.100.2, and 100.100.100.3; and the IP 4 to the IP 6 may be 100.101.101.1, 100.101.101.2, and 100.101.101.3.

S328. After receiving the link establishment response, the NFVO device sends an NS instantiation success response to the OSS/BSS.

In this embodiment of this application, the NSD includes the description information of the router, so that the router can be configured based on the NSD in the NS instantiation process. After instantiating the VNF, the NFVO device obtains, from the VNFM device, the IP address of the virtual machine allocated to the VNF instance, and requests the VIM to establish the link between the IP address of the virtual machine and the router. Therefore, there is no need to manually configure the IP address of the virtual machine or manually establish the link between the IP address of the virtual machine and the router in the entire NS instantiation process.

FIG. 4 shows an NS instance obtained by instantiating an NS based on an NSD according to this embodiment of this application. The NS instance includes: a VNF 1 instance, a VNF 2 instance, a CP A instance, a CP B instance, an NS VL 1 instance, an NS VL 2 instance, a router instance, a SAP instance, and an EX VL instance. The VNF 1 instance belongs to a virtual local area network (Virtual Local Area Network, VLAN) 100, and the VNF 2 instance belongs to a VLAN 200. The VNF 1 instance includes a VM 1, a VM 2, and a VM 3. The VNF 2 instance includes a VM 4, a VM 5, and a VM 6. Communication addresses of the VM 1, the VM 2, and the VM 3 are the IP 1, the IP 2, and the IP 3. Communication addresses of the VM 4, the VM 5, and the VM 6 are the IP 4, the IP 5, and the IP 6. The VM 1, the VM 2, and the VM 3 share the communication address loopback2 or virtualIP2 of the VNF 1 instance (namely, the IP address of the CP A). The VM 4, the VM 5, and the VM 6 share the communication address loopback4 or virtualIP2 of the VNF 2 instance (namely, the IP address of the CP B). The router stores the routing table 1 and the routing table 2 that are configured by the VIM. It should be noted that the routing table 1 and the routing table 2 may alternatively be combined into one routing table.

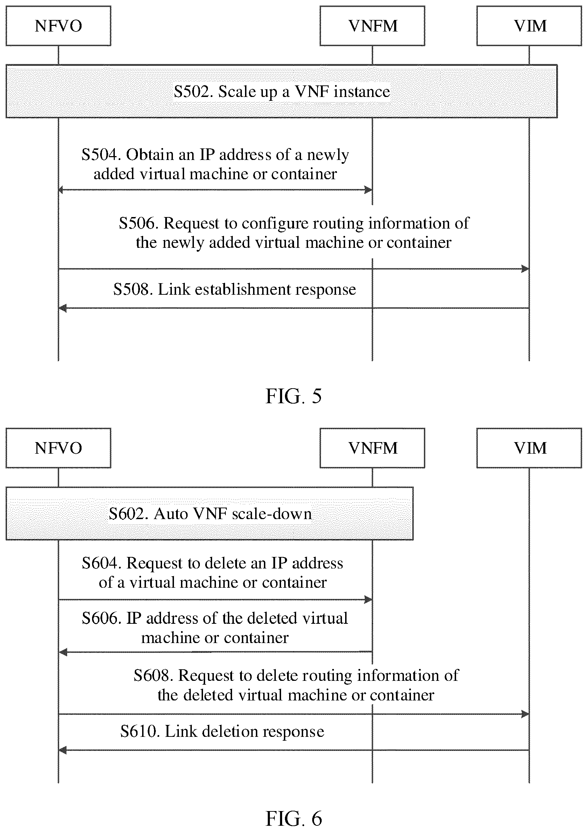

FIG. 5 is a flowchart of a method for adding routing information of a virtual machine or container after a VNF instance is scaled up according to an embodiment of this application. The method includes the following steps.

S502. Scale up any VNF instance in a running process after NS instantiation. Scale-up is a process of adding one or more virtual machines or containers to the VNF instance or adding a VNF instance with a same function.

S504. An NFVO device obtains an IP address of a newly added virtual machine or container after scaling up the VNF instance.

The IP address of the newly added virtual machine or container may be an IP address of a virtual machine or container included in a newly added VNF instance, or may be an IP address of a newly added virtual machine or container in an original VNF instance.

A VNFM device may send the IP address of the newly added virtual machine or container to the NFVO device after the VNF instance is scaled up. Alternatively, the NFVO device may send, to the VNFM device after receiving a response indicating that the VNF instance is successfully scaled up, a request for obtaining the IP address of the newly added virtual machine. The request for obtaining the IP address of the newly added virtual machine or container may carry an identifier of the scaled-up VNF instance. After receiving the request that is for obtaining the IP address of the newly added virtual machine or container and sent by the NFVO device, the VNFM device sends the IP address of the newly added virtual machine or container to the NFVO device.

For S506 and S508, refer to the descriptions of S324 and S326 in FIG. 3. Details are not described in this embodiment of this application again.

In this embodiment of this application, after scaling up the VNF instance, the NFVO device obtains the IP address of the virtual machine (namely, the address of the newly added virtual machine) allocated to the scaled-up VNF instance, and requests a VIM to configure, on a router, routing information of the newly added virtual machine or container. Therefore, there is no need to manually configure the IP address of the virtual machine or manually establish a link between the IP address of the virtual machine and the router in the VNF instance scale-up procedure, so that the newly-added virtual machine obtained through scale-up quickly processes services. This improves service processing efficiency by sharing processing tasks processed between virtual machines before scale-up.

FIG. 6 is a flowchart of a method for deleting routing information of a virtual machine or container after a VNF instance is scaled down according to an embodiment of this application. The method includes the following steps.

S602. Scale down any VNF instance in a running process after NS instantiation. Scale-down is a process of deleting one or more virtual machines or containers from the VNF instance or deleting a VNF instance. For example, two or more VNF instances with a same function are deployed in an NS based on service requirements, and therefore all virtual machines on a VNF instance may be deleted during scale-down.

S604. An NFVO device obtains an IP address of a deleted virtual machine or container after scaling down the VNF instance.

The IP address of the deleted virtual machine or container may be IP addresses of all virtual machines or containers included in a deleted VNF instance, or may be an IP address of a virtual machine or container deleted from the VNF instance.

A VNFM device may send the IP address of the deleted virtual machine or container to the NFVO device after the VNF instance is scaled down. Alternatively, the NFVO device may send, to the VNFM device after receiving a response indicating that the VNF instance is successfully scaled down, a request for obtaining the IP address of the deleted virtual machine or container. The request for obtaining the IP address of the deleted virtual machine or container may carry an identifier of the deleted virtual machine or container and/or an identifier of the deleted VNF instance. After receiving the request that is for obtaining the IP address of the deleted virtual machine or container and sent by the NFVO device, the VNFM device sends the IP address of the deleted virtual machine to the NFVO device.

For S606 and S608, refer to the descriptions of S324 and S326 in FIG. 3. Details are not described in this embodiment of this application again.

In this embodiment of this application, after the VNF instance is scaled down, the NFVO device obtains the IP address of the virtual machine of the deleted VNF instance (namely, the address of the deleted virtual machine), and requests a VIM to delete a route of the deleted virtual machine or container from a router instance. Therefore, there is no need to manually configure IP addresses for virtual machines or manually delete a link between a virtual machine and a router in the VNF instance scale-down procedure, so that scale-down efficiency is improved and deleted virtual machine resources can be quickly released.

In addition, in this embodiment of this application, during NS healing (after an NS is faulty and is recovered by the VNFM device), NS termination (after the VNFM device receives a request for deleting an NS entity and performs operations), and VNF healing (after a VNF is faulty and is recovered by the VNFM device), the NFVO device may further obtain an IP address of a changed virtual machine, and send the obtained IP address of the virtual machine to the VIM, to request the VIM to establish a link from a router to the changed virtual machine, or delete a link from the router to the changed virtual machine. A specific procedure is similar to the descriptions in FIG. 5 or FIG. 6, and details are not described in this embodiment of this application again.

In the foregoing embodiments provided in this application, the methods provided in embodiments of this application are described from the perspective of interaction between nodes (the NFVO device and the VIM). It may be understood that, to implement functions of the network elements such as the NFVO device and the VIM in the methods provided in the foregoing embodiments of this application, the NFVO device and the VIM include corresponding hardware structures and/or software units for performing the functions. A person skilled in the art should easily be aware that, in combination with the examples described in the embodiments disclosed in this specification, algorithm steps may be implemented by hardware or a combination of hardware and computer software in this application. Whether a function is performed by hardware or hardware driven by computer software depends on particular applications and design constraints of the technical solutions.

In embodiments of this application, the VNFM device and the NFVO device may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that division into units in embodiments of this application is an example, and is merely a logical function division. Another division manner may be used during actual implementation.

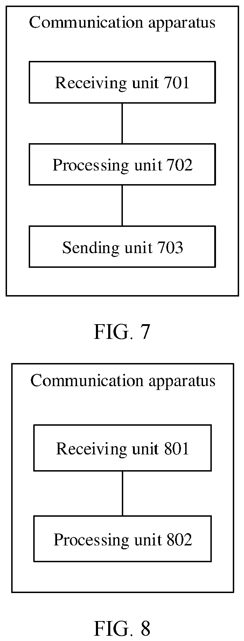

When each functional unit is obtained through division based on each corresponding function, FIG. 7 is a possible schematic composition diagram of the communication apparatus in the foregoing embodiments. The communication apparatus can perform the steps performed by the NFVO device and the VIM in the method embodiments of this application. The communication apparatus may include a receiving unit 701, a processing unit 702, and a sending unit 703.

When the communication apparatus is the NFVO device, the receiving unit 701 is configured to support the NFVO device to perform the methods described in embodiments of this application. For example, the receiving unit 701 is configured to perform or is configured to support the communication apparatus to perform S302, S306, S310, S316, S322, and S326 in the method shown in FIG. 3, S508 in the method shown in FIG. 5, and S608 in the method shown in FIG. 6.

The processing unit 702 is configured to obtain a deployment template of an NS NSD based on an identifier of the NS, where the NSD includes description information of a router RD.

The sending unit 703 is configured to perform or is configured to support the NFVO device to perform S312 and S318 in the method shown in FIG. 3, and S502 and S504 in the method shown in FIG. 5, and S602 and S604 in the method shown in FIG. 6.

In addition, the sending unit 703 is further configured to perform or is configured to support the NFVO device to perform S304, S308, S314, S320, S324, and S328 in the method shown in FIG. 3, S506 in the method shown in FIG. 5, and S606 in the method shown in FIG. 6.

When each functional unit is obtained through division based on each corresponding function, FIG. 8 is a possible schematic composition diagram of another communication apparatus in the foregoing embodiments. The communication apparatus can perform the steps performed by the VIM in the method embodiments of this application. The communication apparatus may include a receiving unit 801 and a processing unit 802.

When the communication apparatus is the VIM, the receiving unit 801 is configured to support the VIM to perform the method described in embodiments of this application. For example, the receiving unit 801 is configured to perform or is configured to support the VIM to perform S312a, S312b, S312c, S312d, S318, and S324 in the method shown in FIG. 3, S506 in the method shown in FIG. 5, and S606 in the method shown in FIG. 6.

The sending unit 703 is configured to perform or is configured to support the VIM to perform S326 in the method shown in FIG. 3, S508 in the method shown in FIG. 5, and S608 in the method shown in FIG. 6.

It should be noted that all related content of the steps in the foregoing method embodiments may correspond to function descriptions of corresponding functional units, and details are not described herein again.

The communication apparatus provided in this embodiment of this application is configured to perform the method in any one of the foregoing embodiments, and therefore can achieve same effects as those in the methods in the foregoing embodiments.

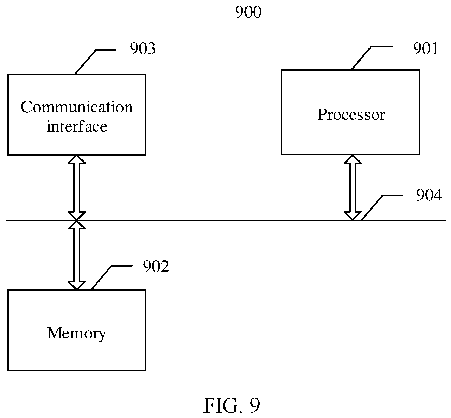

FIG. 9 shows a communication apparatus 900 according to an embodiment of this application. The communication apparatus 900 is configured to implement functions of the VNFM device in the foregoing method. The communication apparatus 900 may be the VNFM device, or may be an apparatus in the VNFM device. In addition, the communication apparatus 900 may be a chip system. In this embodiment of this application, the chip system may include a chip, or may include a chip and another discrete device. Alternatively, the communication apparatus 900 is configured to implement functions of the NFVO device in the foregoing methods. The communication apparatus 900 may be the NFVO device, or may be an apparatus in the NFVO device. The communication apparatus 900 may be a chip system. Alternatively, the communication apparatus 900 is configured to implement functions of the VIM in the foregoing methods. The communication apparatus 900 may be the VIM, or may be an apparatus in the VIM. The communication apparatus 900 may be a chip system.

The communication apparatus 900 includes at least one processor 901, configured to implement functions of the VNFM device, the NFVO device, or the VIM in the methods provided in embodiments of this application. For example, the processor 901 may be configured to deploy a virtual machine based on a virtual resource template indicated by a deployment condition, or the like. For details, refer to detailed descriptions in the method examples. Details are not described herein again.

The communication apparatus 900 may further include at least one memory 902, configured to store program instructions and/or data. The memory 902 is coupled to the processor 901. Coupling in embodiments of this application is indirect coupling or a communication connection between apparatuses, units, or units. The coupling may be in an electrical form, a mechanical form, or another form, and is used for information exchange between apparatuses, units, or units. The processor 901 may collaborate with the memory 902. The processor 901 may execute the program instructions stored in the memory 902. At least one of the at least one memory may be included in the processor.

The processor 901 may be alternatively a virtualized processor and the memory 902 may be alternatively a virtualized memory.

The communication apparatus 900 may further include a communication interface 903, configured to communicate with another device through a transmission medium, so that an apparatus in the communication apparatus 900 can communicate with another device. For example, if the communication apparatus is an NFVO device, the another device is a VNFM device or a VIM. If the communication apparatus is a VIM, the another device is a VNFM device or an NFVO device. The processor 901 receives and sends data through the communication interface 903, and is configured to implement the method performed by the VNFM or the NFVO device in the embodiments corresponding to FIG. 3 and FIG. 5.

In addition, the communication apparatus 900 may further include a network interface, configured to communicate with an external device. For example, the network interface is configured to communicate with the VIM.

In this embodiment of this application, a specific connection medium between the communication interface 903, the processor 901, and the memory 902 is not limited. In this embodiment of this application, the communication interface 903, the processor 901, and the memory 902 in FIG. 9 are connected through a bus 904. The bus is represented by using a thick line in FIG. 9. A connection manner between other components is merely an example for description, and does not constitute any limitation. Buses may be classified into an address bus, a data bus, a control bus, and the like. For ease of representation, only one thick line is used to represent the bus in FIG. 9, but this does not mean that there is only one bus or only one type of bus.

In embodiments of this application, the processor may be a general-purpose processor, a digital signal processor, an application-specific integrated circuit, a field-programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor. The steps of the methods disclosed with reference to embodiments of this application may be directly performed and completed by a hardware processor, or may be performed and completed by using a combination of hardware and software units in the processor.

In embodiments of this application, the memory may be a nonvolatile memory such as a hard disk drive (hard disk drive, HDD) or a solid-state drive (solid-state drive, SSD), or may be a volatile memory (volatile memory) such as a random access memory (random-access memory, RAM). The storage is any other medium that can carry or store expected program code in a form of an instruction or a data structure and that can be accessed by a computer, but is not limited thereto. The memory in embodiments of this application may be alternatively a circuit or any other apparatus that can implement a storage function, and is configured to store program instructions and/or data.

The foregoing descriptions about the implementations allow a person skilled in the art to clearly understand that, for the purpose of convenient and brief description, division into the foregoing functional units is merely an example for illustration. During actual application, the foregoing functions may be implemented by different functional units as required, that is, an inner structure of an apparatus is divided into different functional units to implement all or some of the functions described above.

In the several embodiments provided in this application, it should be understood that the disclosed apparatus and method may be implemented in other manners. For example, division into the units or units is merely logical function division. There may be another division manner in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

All or some of the methods provided in embodiments of this application may be implemented by using software, hardware, firmware, or any combination thereof. When the functions are implemented by using software, all or some of the functions may be implemented in a form of a computer program product. The computer program product includes one or more computer instructions. When the computer program instructions are loaded and executed on a computer, the procedure or the functions according to the embodiments of this application are all or partially generated. The computer may be a general-purpose computer, a dedicated computer, a computer network, a network device, a terminal, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

## Claims

1. A network service NS deployment method, comprising:
receiving, by a network functions virtualization orchestrator NFVO device, a request for instantiating an NS, wherein the request for instantiating the NS carries an identifier of the to-be-instantiated NS;
obtaining, by the NFVO device, a deployment template of the NS NSD based on the identifier of the NS, wherein the NSD comprises description information of a router RD; and
requesting, by the NFVO device based on the description information of the router, a virtualized infrastructure manager VIM to create a router instance.

2. The method according to claim 1, wherein the NSD further comprises description information of an external virtual link EX VL EX VLD, the external virtual link is a virtual link between the router instance and a service access point SAP instance of the NS, and the method further comprises:
requesting, by the NFVO device based on the description information of the EX VL, the VIM to create an external virtual link instance.

3. The method according to claim 2, wherein the requesting the VIM to create an external virtual link instance comprises:
sending, by the NFVO device, the description information of the external virtual link to the VIM, to request the VIM to create the external virtual link instance.

4. The method according to claim 2 or 3, wherein the description information of the router RD comprises an identifier of the EX VLD, and the method further comprises:
requesting, by the NFVO device based on the identifier of the EX VLD, the VIM to establish a link between the EX VL instance and the router instance, wherein the request for establishing the link between the EX VL instance and the router instance comprises the identifier of the EX VLD and an identifier of the router.

5. The method according to any one of claims 1 to 4, wherein the NSD further comprises description information of an NS virtual link NS VLD, the NS VLD is for establishing a virtual link between the router and a VNF instance of the NS, and the method further comprises:
requesting, by the NFVO device based on the NS VLD, the VIM to create an NS VL instance.

6. The method according to claim 5, wherein the description information of the router RD comprises an identifier of the NS VLD, and the method further comprises: requesting, by the NFVO device based on the identifier of the NS VLD, the VIM to establish a link between the NS VL instance and the router instance, wherein the request for establishing the link between the NS VL instance and the router instance comprises the identifier of the NS virtual link NS VLD and the identifier of the router.

7. The method according to any one of claims 1 to 6, wherein the description information of the router RD comprises an IP address of a connection point of a to-be-instantiated VNF, and the method further comprises:
sending a request for instantiating the virtualized network function VNF to a VNFM device, wherein the request for instantiating the VNF comprises the IP address of the connection point of the to-be-instantiated VNF.

8. The method according to claim 7, wherein the method further comprises:
obtaining, by the NFVO device, an IP address of a virtual machine or container of the VNF instance from the VNFM device after instantiating the VNF; and
requesting, by the NFVO device, the VIM to configure routing information of the virtual machine or container of the VNF instance on the router instance based on the IP address of the virtual machine or container.

9. The method according to claim 8, wherein the method further comprises:
after the VNF instance is scaled up, obtaining, by the NFVO device from the VNFM device, an IP address of a virtual machine or container newly added to the VNF instance; and
requesting, by the NFVO device based on the IP address of the newly added virtual machine or container, the VIM to configure routing information of the newly added virtual machine or container on the router instance.

10. The method according to claim 7 or 8, wherein the method further comprises:
after the VNF instance is scaled down, obtaining, by the NFVO device from the VNFM device, an IP address of a virtual machine or container deleted from the VNF instance; and
requesting, by the NFVO device based on the IP address of the deleted virtual machine or container, the VIM to delete routing information of the deleted virtual machine or container from the router instance.

11. A network service NS deployment method, comprising:
receiving, by a virtualized infrastructure manager VIM, a request for creating a router instance, wherein the request for creating the router instance is sent by a network functions virtualization orchestrator NFVO device, and comprises description information of a router RD comprised in a deployment template of an NS NSD; and
creating, by the VIM, the router instance based on the description information of the router.

12. The method according to claim 11, wherein the method further comprises:
receiving, by the VIM, a request that is for creating an instance of an external virtual link EX VL and sent by the NFVO device, wherein the external virtual link is a virtual link between the router instance and a service access point SAP instance of the NS, and the request for creating the instance of the external virtual link comprises description information of the external virtual link EX VLD; and
creating, by the VIM, the instance of the external virtual link EX VL based on the description information of the external virtual link.

13. The method according to claim 11 or 12, wherein the method further comprises:
receiving, by the VIM, a request for establishing a link between the EX VL instance and the router instance, wherein the request for establishing the link between the EX VL instance and the router instance is sent by the NFVO device, and comprises an identifier of the EX VL and an identifier of the router; and
establishing, by the VIM, the link between the EX VL instance and the router instance based on the request for establishing the link between the EX VL instance and the router instance.

14. The method according to any one of claims 11 to 13, wherein the method further comprises:
receiving, by the VIM, a request that is for creating an instance of the NS virtual link NS VL and sent by the NFVO device, wherein the NS VL is a virtual link between the router instance and a VNF instance of the NS, and the request for creating the instance of the NS virtual link NS VL comprises description information of the NS VL NS VLD; and
creating, by the VIM, the instance of the NS virtual link NS VL based on the NS VLD.

15. The method according to claim 14, wherein the method further comprises:
receiving, by the VIM, a request for establishing a link between the NS VL instance and the router instance, wherein the request for establishing the link between the NS VL instance and the router instance is sent by the NFVO device, and comprises an identifier of the NS virtual link NS VLD and the identifier of the router; and
establishing, by the VIM, the link between the NS VL instance and the router instance based on the request for establishing the link between the NS VL instance and the router instance.

16. The method according to any one of claims 11 to 15, wherein the method further comprises:
receiving, by the VIM, a request that is for configuring routing information of a virtual machine or container of the VNF instance and sent by the NFVO device, wherein the request for configuring routing information of virtual machine or container of the VNF instance comprises the identifier of the router, an IP address of the virtual machine, and an IP address of a connection point of the VNF instance; or the request for configuring the routing information of the container of the VNF instance comprises the identifier of the router, an IP address of the container, and an IP address of a connection point of the VNF instance; and
configuring, by the VIM, the routing information of the virtual machine or container of the VNF instance on the router instance based on the request for configuring the routing information of the virtual machine or container of the VNF instance.

17. The method according to any one of claims 11 to 15, wherein the method further comprises:
receiving, by the VIM, a request for deleting routing information of a virtual machine or container of the VNF instance, wherein the request for deleting the routing information of the virtual machine or container of the VNF instance is sent by the NFVO device, and comprises the identifier of the router, an IP address of the virtual machine or container, and an IP address of a connection point of the VNF instance; and
deleting, by the VIM, the routing information of the virtual machine or container of the VNF instance from the router instance based on the request for deleting the routing information of the virtual machine or container of the VNF instance.

18. A communication apparatus, comprising:
a receiving unit, configured to receive a request for instantiating an NS, wherein the request for instantiating the NS carries an identifier of the to-be-instantiated NS;
a processing unit, configured to obtain a deployment template of the NS NSD based on the identifier of the NS, wherein the NSD comprises description information of a router RD; and
a sending unit, configured to request, based on the description information of the router, a virtualized infrastructure manager VIM to create a router instance.

19. The communication apparatus according to claim 18, wherein the NSD further comprises description information of an external virtual link EX VL EX VLD, and the external virtual link is a virtual link between the router instance and a service access point SAP instance of the NS; and
the sending unit is further configured for the NFVO device to request, based on the description information of the EX VL, the VIM to create an external virtual link instance.

20. The communication apparatus according to claim 19, wherein the sending unit requests the VIM to create an external virtual link instance comprises:
sending the description information of the external virtual link to the VIM, to request the VIM to create the external virtual link instance.

21. The communication apparatus according to claim 19 or 20, wherein the description information of the router RD comprises an identifier of the EX VLD, and the sending unit is further configured to: request, based on the identifier of the EX VLD, the VIM to establish a link between the EX VL instance and the router instance, wherein the request for establishing the link between the EX VL instance and the router instance comprises the identifier of the EX VLD and an identifier of the router.

22. The method according to any one of claims 18 to 21, wherein the NSD further comprises description information of an NS virtual link NS VLD, the NS VLD is for establishing a virtual link between the router and a VNF instance of the NS, and the sending unit is further configured to request, based on the NS VLD, the VIM to create an NS VL instance.

23. The communication apparatus according to claim 22, wherein the description information of the router RD comprises an identifier of the NS VLD, and the sending unit is further configured to request, based on the identifier of the NS VLD, the VIM to establish a link between the NS VL instance and the router instance, wherein the request for establishing the link between the NS VL instance and the router instance comprises the identifier of the NS virtual link NS VLD and the identifier of the router.

24. The communication apparatus according to any one of claims 18 to 23, wherein the description information of the router RD comprises an IP address of a connection point of a to-be-instantiated VNF, and the sending unit is further configured to send a request for instantiating the virtualized network function VNF to a VNFM device, and the request for instantiating the VNF comprises an IP address of a connection point of the to-be-instantiated VNF

25. The communication apparatus according to claim 24, wherein
the receiving unit is further configured to obtain an IP address of a virtual machine or container of the VNF instance from the VNFM device after the VNF is instantiated; and
the sending unit is further configured to request the VIM to configure routing information of the virtual machine or container of the VNF instance on the router instance based on the IP address of the virtual machine or container.

26. The communication apparatus according to claim 25, wherein
after the VNF instance is scaled up, the receiving unit is further configured to obtain, from the VNFM device, an IP address of a virtual machine or container newly added to the VNF instance; and
the sending unit is further configured to request, based on the IP address of the newly added virtual machine or container, the VIM to configure routing information of the newly added virtual machine or container on the router instance.

27. The communication apparatus according to claim 24 or 25, wherein
after the VNF instance is scaled down, the receiving unit is further configured to obtain, from the VNFM device, an IP address of a virtual machine or container deleted from the VNF instance; and
the sending unit is further configured to request, based on the IP address of the deleted virtual machine or container, the VIM to delete routing information of the deleted virtual machine or container from the router instance.

28. A communication apparatus, comprising:
a receiving unit, configured to receive a request for creating a router instance, wherein the request for creating the router instance is sent by a network functions virtualization orchestrator NFVO device, and comprises description information of a router RD comprised in a deployment template of an NS NSD; and
a processing unit, configured to create the router instance based on the description information of the router.

29. The communication apparatus according to claim 28, wherein
the receiving unit is further configured to receive a request for creating an instance of an external virtual link EX VL and sent by the NFVO device, wherein the external virtual link is a virtual link between the router instance and a service access point SAP instance of the NS, and the request for creating the instance of the external virtual link instance comprises description information of the external virtual link EX VLD; and
the processing unit is further configured to create the external virtual link EX VL instance based on the description information of the external virtual link.

30. The communication apparatus according to claim 28 or 29, wherein
the receiving unit is further configured to receive a request for establishing a link between the EX VL instance and the router instance, wherein the request for establishing the link between the EX VL instance and the router instance is sent by the NFVO device, and comprises an identifier of the EX VL and an identifier of the router; and
the processing unit is further configured to establish the link between the EX VL instance and the router instance based on the request for establishing the link between the EX VL instance and the router instance.

31. The communication apparatus according to any one of claims 28 to 30, wherein
the receiving unit is further configured to receive a request for creating an instance of the NS virtual link NS VL and sent by the NFVO device, wherein the NS VL is a virtual link between the router instance and a VNF instance of the NS, and the request for creating the instance for the NS virtual link NS VL comprises description information of the NS VL NS VLD; and
the processing unit is further configured to create the instance of the NS virtual link NS VL based on the NS VLD.

32. The communication apparatus according to claim 31, wherein
the receiving unit is further configured to receive a request for establishing a link between the NS VL instance and the router instance, wherein the request for establishing the link between the NS VL instance and the router instance is sent by the NFVO device, and comprises an identifier of the NS virtual link NS VLD and the identifier of the router; and
the processing unit is further configured to establish the link between the NS VL instance and the router instance based on the request for establishing the link between the NS VL instance and the router instance.

33. The communication apparatus according to any one of claims 28 to 32, wherein
the receiving unit is further configured to receive a request that is for configuring routing information of a virtual machine or container of the VNF instance and sent by the NFVO device, wherein the request for configuring the routing information of the virtual machine of the VNF instance comprises the identifier of the router, an IP address of the virtual machine, and an IP address of a connection point of the VNF instance; or the request for configuring the routing information of the container of the VNF instance comprises the identifier of the router, an IP address of the container, and an IP address of a connection point of the VNF instance; and
the processing unit is further configured to configure the routing information of the virtual machine or container of the VNF instance on the router instance based on the request for configuring the routing information of the virtual machine or container of the VNF instance.

34. The communication apparatus according to any one of claims 28 to 33, wherein
the receiving unit is further configured to receive a request for deleting routing information of a virtual machine or container of the VNF instance, wherein the request for deleting the routing information of the virtual machine or container of the VNF instance is sent by the NFVO device, and comprises the identifier of the router, an IP address of the virtual machine or container, and an IP address of a connection point of the VNF instance; and
the processing unit is further configured to delete the routing information of the virtual machine or container of the VNF instance from the router instance based on the request for deleting the routing information of the virtual machine or container of the VNF instance.

35. A communication apparatus, comprising: at least one processor, a memory, a bus, and a transceiver, wherein the memory is configured to store a computer program, and when the computer program is executed by the at least one processor, the method according to any one of claims 1 to 10 or the method according to any one of claims 11 to 17 is implemented.

36. A computer-readable storage medium, comprising computer software instructions, wherein
when the computer software instructions are run on a communication apparatus or a chip built in a communication apparatus, the communication apparatus device is enabled to perform the method according to any one of claims 1 to 10 or the method according to any one of claims 11 to 17.
